# EUROPEAN PATENT SPECIFICATION

(11) **EP 2 067 224 B1**
(45) Date of publication and mention of the grant of the patent: **13.03.2013**
(21) Application number: 07808842.4
(22) Date of filing: 25.09.2007
(51) Int. Cl.: H02G 3/22, F16L 5/06, H02G 15/013

(54) **A CABLE LEAD-THROUGH DEVICE**
KABELDURCHFÜHRUNGSEINRICHTUNG
DISPOSITIF PASSE-CÂBLE

(30) Priority: 29.09.2006 SE 0602019
(43) Date of publication of application: 10.06.2009
(73) Proprietor: Aktiebolaget SKF, S 415 50 Göteborg (SE)
(72) Inventor: JOHANSSON, Mats, 426 58 Västra Frölunda (SE); PETTERSSON, Björn, 434 94 Vallda (SE)
(74) Representative: Westman, Per Börje Ingemar
(86) International application number: PCT/SE2007/000842
(87) International publication number: WO 2008/039132

(56) References cited:
- DE-A1- 3 824 648
- DE-A1- 3 824 648
- DE-C1- 19 534 484
- DE-C1- 19 534 484
- DE-U1-202004 017 185
- DE-U1-202004 017 185

## Description

The present invention refers to a device for admitting a cable passing through an opening In a wall In a manner preventing leakage into the cable or through the wall.

Such cable lead-through devices are for instance intended for a cable, arranged for supplying power and to transmit data regarding the conditions inside a bearing housing to a data processing and/or recording unit. Such an application is for instance used in a bearing housing supporting a roller for a roller bed of a continuous casting machine. In such an environment the rollers and the bearing housings are subjected to heat from the hot casting slabs transported on the roller bed, and which transfer heat to the rollers, and the external water cooling of the rollers means that the atmosphere around the rollers and the bearing housings is very humid. Furthermore the environment Is subjected to dirt, for instance from scales coming loose from the cooling slabs transported on the roller bed.

This aggressive environment puts very hard demands on the sealing of the cable lead-through and it also means that it is necessary to use high-quality materials, which are expensive.

Conventional contact sleeves used for this purpose are complex and comparatively expensive, and beside that, they are not always able to provide an adequate sealing-result.

Examples of prior art devices are presented below.

DE 195 34 484 discloses a device for passage of conduits through an opening in a wall. The device comprises a heat shrinkable tube configured to prevent leakage in the opening in the wall.

DE 38 24 648 discloses a bushing for a cable not having completely round cross-sections. The bushing comprises two slotted discs between which a packaging is located for preventing leakage there through.

DE 20 2004 017 185 U1 discloses a sealing device for sealing a line. The device comprises a sealing body and two tensioning bodies for entrance of the line in an axial direction, wherein a region of one of the tensioning bodies is made with a reduced strength.

Therefor the purpose of the present invention is to provide a cable lead-through device, which gives a very good sealing result, and which also Is inexpensive in comparison with the earlier used solutions, and this has been achieved in that the cable lead-through device has been given the characteristics defined in the accompanying claim 1.

Hereinafter the invention will be further described with reference to not limiting embodiments of the cable lead-through according to the invention Illustrated In the accompanying drawings.
Fig. 1 is a schematical view of a first embodiment of a cable lead-through device according to the invention shown In a longitudinal section,
Fig. 2 is a perspective view of an embodiment of an electric screen forming part of the device according to Fig. 1,
Fig. 3 is a cross section of a schematically illustrated cable lead-through device according to a second embodiment of the present invention.
Fig. 4 is a perspective view showing a cable lead-through device in accordnace with the embodiment according to Fig. 3,
Fig. 5 is a schematical cross-section through a portion of a wall with a through-hole, and with the cable lead-through device as shown in Figs. 3 and 4 arranged in the through-hole,
Fig. 6 is a cross-section through a portion of a wall with a through-hole, and with a third embodiment of a cable lead-through device, according to the invention, arranged in the through-hole,
Fig. 7 is a schematic cross section of a modified embodiment of the cable lead-through device according to Fig. 1, and
Fig. 8 is a further modified embodiment of the cable lead-through device according to Fig. 1.

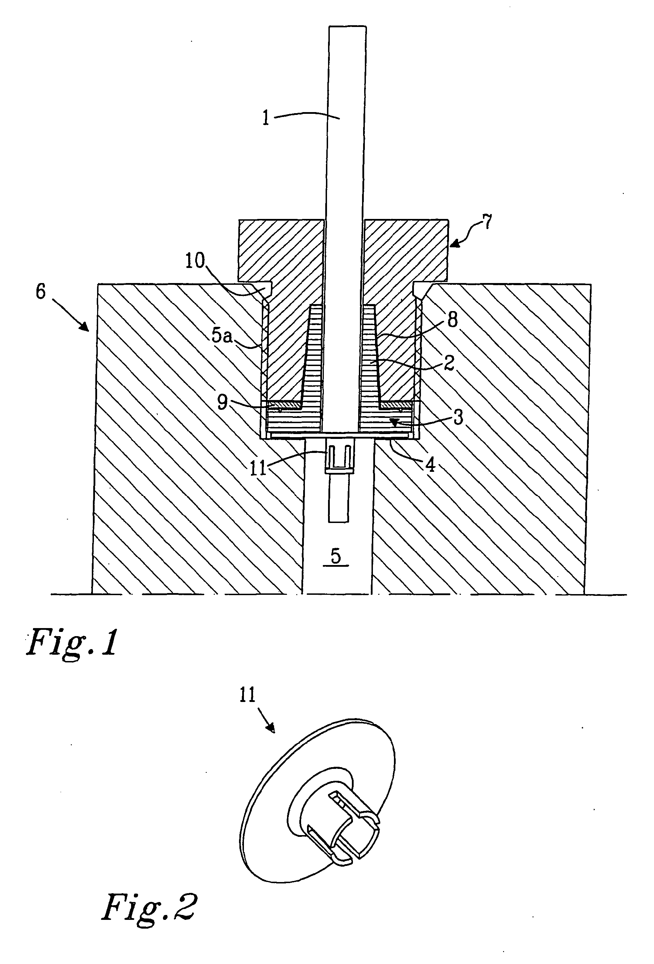

Fig. 1 illustrates schematically and in a longitudinal section a first embodiment of a cable lead-through device according to the invention, which is connected to a cable 1, a portion of which is schematically shown. The device comprises a socket 2 which is moulded to the cable and having a tapering outer form with an integrated radial flange 3 around the broader end of the socket. This radial flange 3 is adapted to rest on a seat 4 provided in a through-bore 5 in a housing 6.

The moulded socket 2 is made from a material having a good adhesiveness to the cable 1, thereby eliminating a possible leak path, between the cable 1 and the socket 2 itself.

An upper part of the through-bore 5 in the housing, at least situated above the socket flange 3, when this is positioned in the through-bore, is provided with an internal thread corresponding to an outer thread in a nut 7. This nut has a through-hole for the cable 1 and which through-hole towards the end of the nut projecting towards the flange 3 expands to a conical recess 8 having a taper substantially corresponding to that of the socket 2.

The nut 7, which can be of metal or of a rigid plastic material, will press with an inner, annular end against the upper side of the flange 3 on the socket 2, when the nut 7 is screwed into the through-bore 5 in the housing 6, whereby the flange 3 is sealingly pressed against the seat 4. An annular groove 10 is provided between a top head of the nut 7 and its threaded outer part, and this grove can be provided with a sealing arrangement, such as for instance a compressible O-ring of rubber, in cases where a better sealing effect is wanted between the outside of the nut 7 and the through-hole 5 in the housing 6.

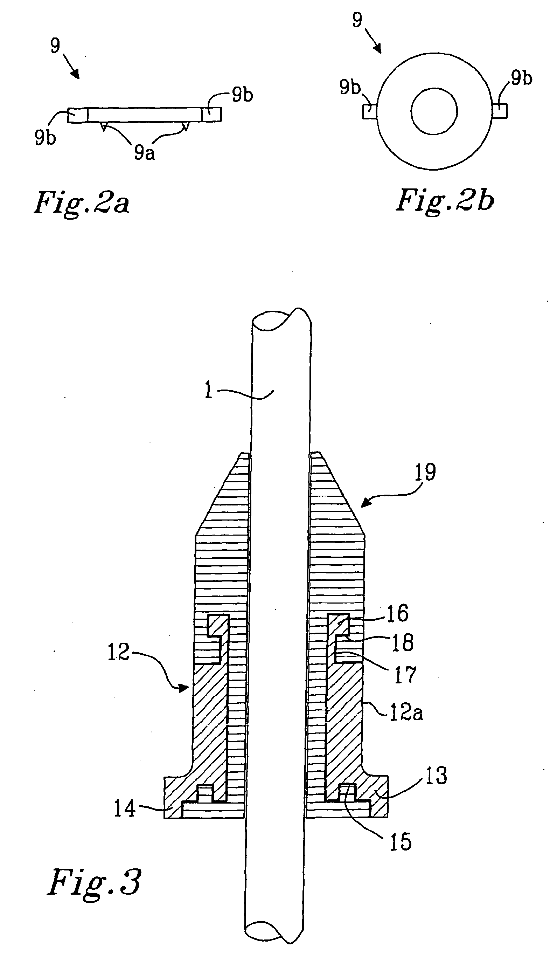

For ascertaining that the cable 1 is prevented from starting to rotate when the nut 7 is tightened, there is positioned a thrust washer 9 between the bottom surface of the nut and the flange 3 of the moulded socket. As can be seen in Figs. 2a and 2b this thrust washer 9 has planar upper surface against which the bottom of the nut 7 can slide, when the nut is tightened, and at the bottom of the washer 9 there are provided nibs 9a intended to dig into the material of the moulded flange 3. Furthermore the thrust washer 9 has radially extending lugs 9b intended to project into not further shown cut-outs in the housing 6. In this manner it is ascertained that the tightening force on the nut will not cause the cable to be twisted and damaged.

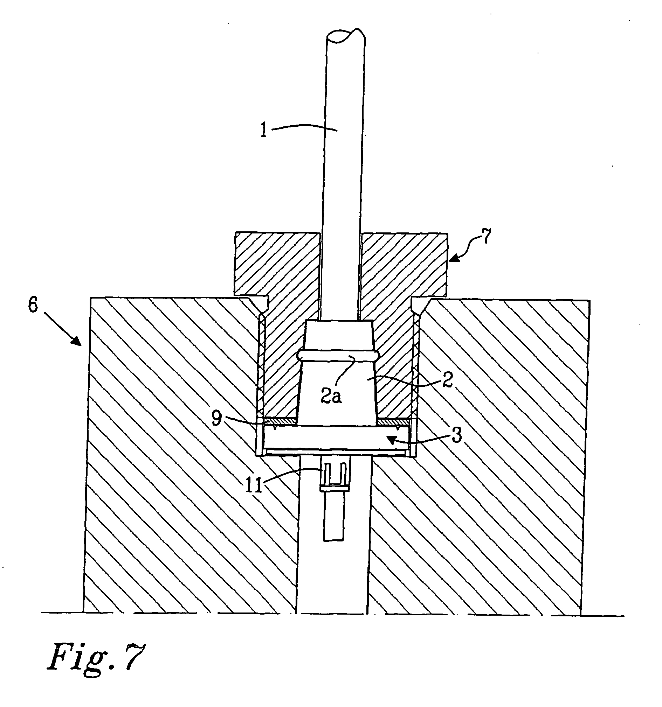

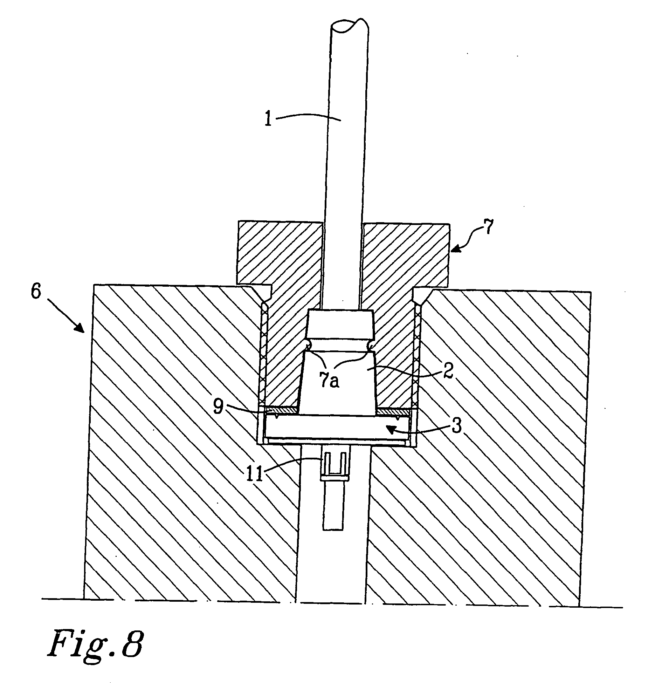

For increasing the sealing effect between the nut and the moulded socket there might be provided a circumferential rim 2a on the envelope surface of the socket as illustrated in Fig. 7 and as an alternative there might be provided in the nut 7 an external circumferential rim 7a as illustrated in Fig. 8.

An electric screen 11 intended to increase the electro magnetic compatibility, EMC, is positioned around a portion of the cable 1 situated inwardly with respect to the device and extending between the inner side of the moulded socket 2 and the seat 4 in the through-hole 5. This electric screen can have a continuous or slotted portion surrounding the cable, such as illustrated in perspective in Fig. 2.

The two possible leak paths, i.e. between the cable 1 and the interior of the socket 2 on one hand and between the nut 7 and the through-hole 5 in the housing 6 on the other hand, are efficiently sealed off by the cable lead-through device illustrated in Fig. 1 in a simple and reliable manner.

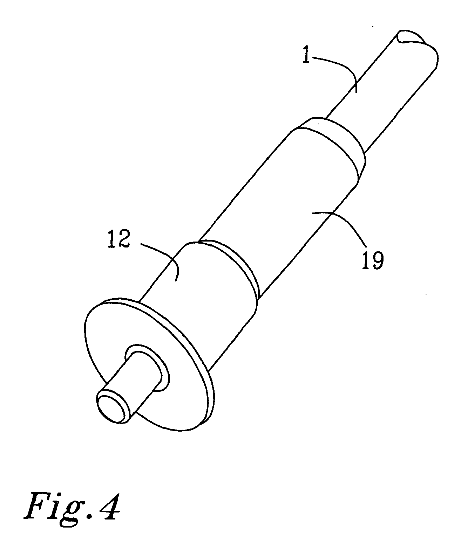

In Figs. 3 and 4 is shown in a cross-section and a perspective view, resp., a different embodiment of a cable lead-through device according to the present invention. This embodiment is primarily intended for a socket moulded from a mouldable material having a low stiffness or rigidity.

Such a material for producing the socket via a moulding process with hotmelt adhesives is considered to have a stiffness and rigidity, which could not by itself withstand the compression forces to which it must be subjected for giving a sufficient sealing effect, and for this reason, the device according to this embodiment comprises a hard and rigid sleeve or bushing 12, preferably made of metal and most preferably from steel, and which is positioned coaxially enclosing a portion of the cable and being spaced from the surface thereof, thus that the sleeve 12 has no physical contact with the cable 1. Adjacent one first axial end, the sleeve 12 has a flared out portion, forming a circumferential flange 13, which is ending in an outer axial rim 14. Inside said rim 14 a circular groove 15 is formed in the end surface of the flanged portion thereby forming an undercut portion.

At the opposite, second axial end, the sleeve or bushing 12 has a portion 16 of smaller section than the rest of the sleeve and between this portion 16 of smaller section and the outer envelope surface 12a of the rest of the sleeve, there is provided a circumferential, inwardly recessed groove 17 forming a further undercut portion 18 adjacent the second end of the sleeve 12.

At manufacture of the cable lead-through device, the cable 1 and the hard and rigid sleeve or bushing 12 are positioned in a not shown mould, with the sleeve 12 positioned concentric with the cable 1 and with its outer envelope surface 12a in close contact with the inner surface of the said mould. A pourable plastic material is introduced in the mould and is brought to cure, thereby forming a close connection between the cable 1 and the inner layer of the plastic socket 19, which also is well anchored to the sleeve 12 by having entered in the undercut portions at both ends of the sleeve.

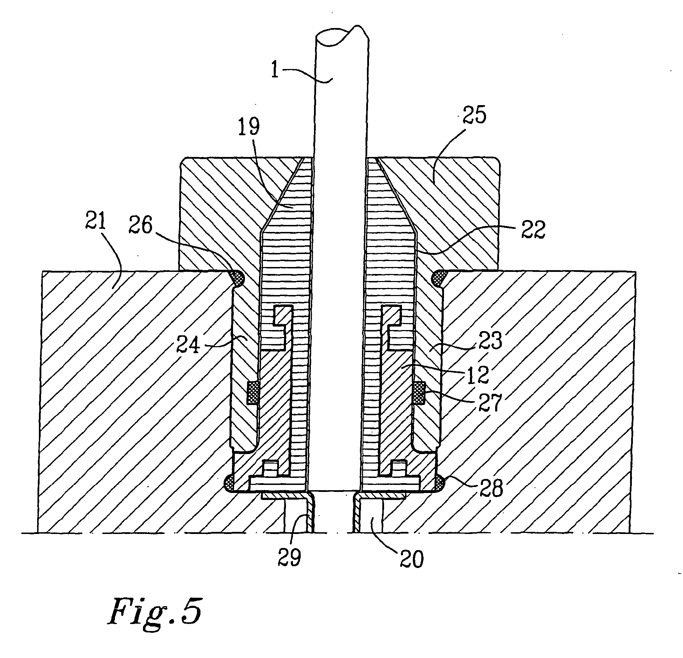

Fig. 5 shows in cross section the cable lead-through device according to Figs. 3 and 4 mounted in a through-hole 20 in a wall 21, e.g. of a bearing housing or the like.

The device incorporating the reinforcing sleeve 12, and the moulded socket 19, with the cable 1 passing therethrough, is inserted in an opening 22 in an annular nut 23, which has a threaded outer envelope surface (not further shown) and which can be screwed into a correspondingly threaded inner envelope surface in an enlarged end portion 24 of the through-hole 20. The nut 23 has a head portion 25 with a diameter larger than that of the enlarged end portion 24 of the through-hole 20, and when the nut 23 is screwed into the enlarged end portion 24, the distance it can be screwed in is limited, in that the side of the head portion 25 facing the exterior of the wall 21, will abut the wall 21, when the nut has been screwed in to a desired degree.

Between the side of the nut 23 facing the wall 21 and a chamferred portion of the wall 21 is arranged a resilient member 26, such as for instance a rubber O-ring, which will be deformed when the nut has been screwed in to its position of use, thereby ascertaining that leakage between the enlarged portion 24 of the through-hole 20 and the outer envelope surface of the nut 23 is the prevented. Further sealing device 27, such as compressible rubber or plastic seals are further positioned in recesses for preventing leakage between the reinforcing sleeve 12 and the interior of the nut 23, and between the circumferential flange 13 of the reinforcing sleeve and the inner part of the enlarged end portion 24 of the through hole 20, respectively.

An electric screen 29 intended to increase the electro magnetic compatibility, EMC, is positioned around a portion of the cable 1 situated inwardly with respect to the device and extending between the inner side of the moulded socket 19 and the bottom of the enlarged portion 24 of the through-hole 20. This electric screen can have a continuous or slotted portion surrounding the cable.

In this manner is created a cable lead-through device, where also a socket 19 of a mouldable material with less stiffness and rigidity can be reinforced to provide a device having a minimum number of leakage passages, which device is easy to install, and which can be made less sensible to chemicals. A good pressure introduction for increasing the sealing function particularly for the seal 26 is obtained with the nut.

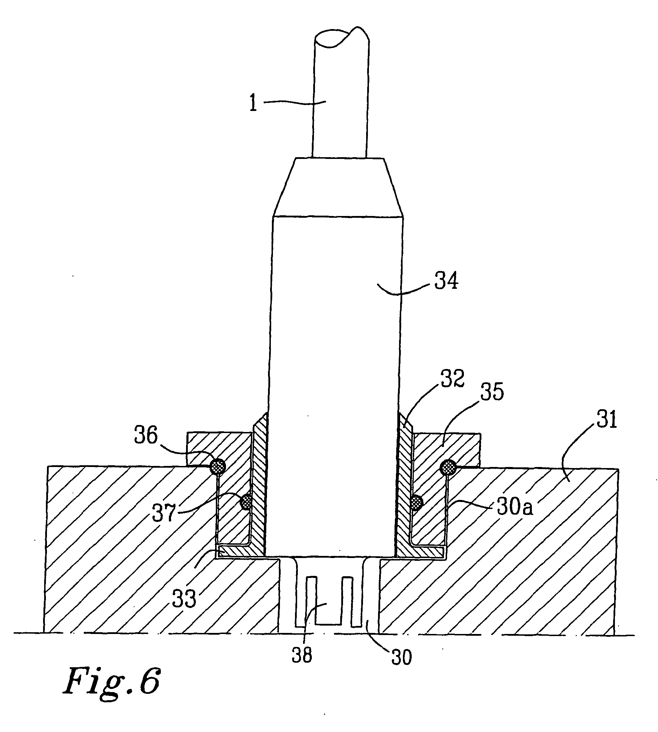

In Fig. 6 is shown a cross section through a part of a wall 31, e.g. a wall of a bearing housing, which wall has a through hole 30, with a cylindrical portion 30a of larger diameter at one side of the wall. In this portion 30a is provided a cable lead-through device of a modified design as compared to those illustrated in Figs. 1 to 5.

A cable 1 is surrounded by a hard and rigid sleeve or bushing 32, preferably made of metal and most preferably from steel, and which is positioned coaxially enclosing a portion of the cable and being spaced from the surface thereof, thus that the sleeve 32 has no physical contact with the cable 1, but leaves an annular space between the inner envelope surface of the bushing 32 and the cable 1. Adjacent a first axial end, the sleeve 32 has a flared out portion, forming a circumferential flange 33.

In the annular space between the sleeve 32 and the cable 1 is provided a moulded plastic socket 34.

The plastic socket 34 gives a good adherence both against the cable 1 and also against the rigid sleeve 32, which acts to reinforce the plastic socket 34. The circumferential flange 33 on the sleeve 32 has a larger outer diameter than the through hole 30, and it therefore will rest on the bottom of the wider cylindrical portion 30a of the through hole 30, in a position substantially centered about the through hole 30. An annular nut 35 is equipped with an inner substantially cylindrical cavity, with an outer diameter allowing it to pass over the rigid sleeve 32. The nut 35 has an external thread (not further shown) and it can be screwed into a corresponding thread in the side surface of the cylindrical portion 30a of the through hole 30 in the wall 31. When the nut thus is screwed into the cylindrical portion 30a it will come to contact against the circumferential flange 33 on the rigid sleeve 32 and press this against the bottom of the cylindrical portion 30a. The nut 35 has a head of larger diameter than the diameter of the cylindrical portion 30a of the through hole 30, and the relation between the lengths of the threads in the surface of the cylindrical portion 30a and on the outer envelope surface of the nut 35 is such that the flange 33 of the sleeve 32 is tightly pressed against the bottom of the cylindrical portion 30a, when the nut has been screwed in. Sealing members 36, 37, preferably in form of resilient and compressible O-ring seals, may be positioned between the nut 35 and the surface of the cylindrical portion 30a in the wall 31, and between the nut 35 and the rigid sleeve 32, respectively. As these sealing members are compressed at mounting, they will prevent leakage on the outer side as well as at the inner side of the nut 35.

An electric screen 38 intended to increase the electro magnetic compatibility, EMC, is positioned around a portion of the cable 1 situated inwardly with respect to the device and between the inner side of the moulded socket 34 and the bottom of the enlarged portion 30a of the through-hole 30.

The embodiment of the cable lead-through device illustrated in Fig. 6 differs from that according to Fig. 5 in that the sleeve 32 reinforcing the moulded socket 34 has a much simpler form than the corresponding reinforcing sleeve 12 in the embodiment according to Fig. 5, and although the sleeve 12 will provide for a more secure connection between itself and the moulded socket, its complex shape will also make it more expensive, and the grip between the more simple reinforcing sleeve 32 and the moulded socket 34, will be sufficient under most circumstances.

Although the opening in the nut has been shown in the drawings with a sharp transition edge it is preferable to give the transition a radius, where the cable exits the nut.

The invention is not limited to the embodiments illustrated in the accompanying drawings and described in connection thereto, but modifications and variants are possible within the scope of the accompanying claims.

## Claims

1. A device for admitting a cable (1) passing a through-hole (5; 20; 30) in a wall (6; 21; 31) in a manner preventing leakage into the cable or through the through-hole in the wall, wherein the through-hole (5; 20; 30) has an outer portion (5a; 24; 30a) of larger diameter, with a seat (4) being formed between the through-hole portions of different diameter, wherein the device incorporates a portion of said cable (1); a socket (2; 19; 34) of mouldable material having a bottom portion (3; 33) arranged to rest against said seat (4) between the through-hole portions, and an annular nut (7; 23; 35) being detachably insertable in said larger portion (5a; 24; 30a) of the through-hole? wherein the nut (7; 23; 35) in its fully inserted position in said larger portion (5a; 24; 30a) is arranged to clamp the said bottom portion (3; 33) of said socket against the seat (4) at the bottom of the larger portion (5a; 24; 30a) of the through-hole (5; 20; 30) in the wall (6; 21; 31),
characterized therein,
that the socket is sealingly moulded around said portion of the cable (1).

2. A device as claimed in claim 1, wherein the annular nut (7; 23; 35) has a head portion (25) of larger diameter than that of the larger portion (5a; 24; 30a) of the through-hole
characterized therein,
that the head is situated at such a distance from the forward surface of the nut, that the lower surface of the said head engages the surface of the wall (6; 21; 31), when said bottom portion (3; 33) is clamped against the bottom of the seat (4).

3. A device as claimed in claim 2,
characterized therein,
that compressible sealing means (26, 27, 28; 36, 37) are arranged at least between not (7; 23; 35) and the side of tho larger portion (5a; 24; 30a) of the through-hole in the wall (6; 21; 31).

4. A device as claimed in anyone of the preceding claims, wherein the material in the moulded socket (19; 34) is of a low strength and/or rigidity,
characterised therein,
that the device incorporates a reinforcing sleeve member (12; 32) configured to surround a portion of the cable (1) without being in physical contact therewith, and configured to be connected to the socket (19; 34) for preventing the material thereof from creeping, when the socket is subjected to a clamping force from the nut (23; 35).

5. A device as claimed in claim 4.
**characterised** therein,
that the reinforcing sleeve member (12) is partly embedded in the material of the moulded socket (19) and has a radially flared out flange (13), adapted to be clamped against said scat (4) under influence of the force from the nut (23) in its fully inserted position in said larger portion (24) of the through-hole in the wall.

6. A device as claimed in claim 5,
**characterized** therein,
that the reinforcing sleeve member (12) has undercut portions (15; 18) adjacent both ends of said reinforcing sleeve member in which material from the moulded socket (19) penetrates for increasing the grip between sleeve member (12) and socket (19).

7. A device as claimed in claim 4,
**characterised** therein,
that the reinforcing sleeve member (32) is arranged to enclose the outside of a portion of the moulded socket (34) and having a radial flange (33) adapted to be clamped against the seat (4), when the nut (35) is in inserted position.

8. A device as claimed in anyone of claims 4 - 7,
**characterized** therein,
that the material in the moulded socket (2; 19; 34) is a hotmelt adhesive giving high adhesive strength to the cable (1) and to the reinforcing sleeve member (12; 32).

9. A device as claimed in anyone of the preceding claims,
**characterized** therein,
that there is provided means (9) for preventing the socket (2) and thereby the cable (1) from rotating when tightening the nut (7; 23; 35).

10. A device as claimed in anyone of the preceding claims,
**characterized** therein,
that pressure increasing means (2a, 7a) are provided for increasing the scaling effect between socket (2) and nut (7; 23; 35).

## Patentansprüche

1. Vorrichtung zum Durchführen eines Kabels (1) durch ein Durchgangsloch (5; 20; 30) in einer Wand (6; 21; 31) in einer Weise, die eine Leckage in das Kabel oder durch das Durchgangsloch in der Wand verhindert, wobei das Durchgangsloch (5; 20; 30) einen äußeren Abschnitt (5a; 24; 30a) mit einem größeren Durchmesser hat, wobei ein Sitz (4) zwischen den Durchgangslochabschnitten mit unterschiedlichem Durchmesser ausgebildet ist, wobei die Vorrichtung einen Abschnitt des Kabels (1), eine Kabelabdichtung (2; 19; 34) aus formbarem Material mit einem Bodenabschnitt (3; 33), der so angeordnet ist, dass er am Sitz (4) zwischen den Durchgangslochabschnitten anliegt, sowie eine ringförmige Mutter (7; 23; 35) beinhaltet, die sich herausnehmbar in den größeren Abschnitt (5a; 24; 30a) des Durchgangslochs einsetzen lässt, wobei die Mutter (7; 23; 35) in ihrer vollständig eingesetzten Position im größeren Abschnitt (5a; 24; 30a) so angeordnet ist, dass der Bodenabschnitt (3; 33) der Abdichtung gegen den Sitz (4) am Boden des größeren Abschnitts (5a; 24; 30a) des Durchgangslochs (5; 20; 30) in der Wand (6; 21; 31) geklemmt wird,
**dadurch gekennzeichnet, dass** die Abdichtung in abdichtender Weise um den Abschnitt des Kabels (1) herum geformt ist.

2. Vorrichtung nach Anspruch 1, bei der die ringförmige Mutter (7; 23; 35) einen Kopfabschnitt (25) hat, dessen Durchmesser größer als derjenige des größeren Abschnitts (5a; 24; 30a) des Durchgangslochs ist, **dadurch gekennzeichnet, dass** sich der Kopf in einer solchen Distanz von der Vorderfläche der Mutter befindet, dass die untere Fläche des Kopfes in die Fläche der Wand (6; 21; 31) eingreift, wenn der Bodenabschnitt (3; 33) gegen den Boden des Sitzes (4) geklemmt wird.

3. Vorrichtung nach Anspruch 2, **dadurch gekennzeichnet, dass** die zusammendrückbaren Abdichtungsmittel (26, 27, 28; 36, 37) mindestens zwischen der Mutter (7; 23; 35) und der Seite des größeren Abschnitts (5a; 24; 30a) des Durchgangslochs in der Wand (6; 21; 31) angeordnet sind.

4. Vorrichtung nach einem der vorstehend aufgeführten Ansprüche, bei der das Material in der geformten Abdichtung (19; 34) eine geringe Festigkeit und/oder Biegesteifheit aufweist, **dadurch gekennzeichnet, dass** die Vorrichtung ein verstärkendes Hülsenelement (12; 32) beinhaltet, das so konfiguriert ist, dass es einen Abschnitt des Kabels (1) umgibt, ohne damit in physischen Kontakt zu kommen, und das so konfiguriert ist, dass es mit der Abdichtung (19; 34) verbunden werden kann, um ein Kriechen seines Materials zu verhindern, wenn die Abdichtung einer von der Mutter (23; 35) ausgeübten Klemmkraft ausgesetzt wird.

5. Vorrichtung nach Anspruch 4, **dadurch gekennzeichnet, dass** das verstärkende Hülsenelement (12) teilweise in das Material der geformten Abdichtung (19) eingebettet ist und einen radial aufgeweiteten Flansch (13) hat, der so ausgebildet ist, dass er unter dem Einfluss der Kraft von der Mutter (23) in ihrer vollständig eingesetzten Position im größeren Abschnitt (24) des Durchgangslochs in der Wand gegen den Sitz (4) geklemmt wird.

6. Vorrichtung nach Anspruch 5, **dadurch gekennzeichnet, dass** das verstärkende Hülsenelement (12) hinterschnittene Abschnitte (15, 18) angrenzend an beide Enden des verstärkenden Hülsenelements hat, wobei Material aus der geformten Abdichtung (19) eindringt, um die Haftung zwischen dem Hülsenelement (12) und der Abdichtung (19) zu verstärken.

7. Vorrichtung nach Anspruch 4, **dadurch gekennzeichnet, dass** das verstärkende Hülsenelement (32) so angeordnet ist, dass es das Äußere eines Abschnitts der geformten Abdichtung (34) umschließt, und das einen radialen Flansch (33) hat, der so ausgebildet ist, dass er gegen den Sitz (4) geklemmt wird, wenn die Mutter (35) in der eingesetzten Position ist.

8. Vorrichtung nach einem der Ansprüche 4 bis 7, **dadurch gekennzeichnet, dass** das Material in der geformten Abdichtung (2; 19; 34) ein Schmelzkleber ist, der dem Kabel (1) und dem verstärkenden Hülsenelement (12; 32) eine hohe Haftfestigkeit verleiht.

9. Vorrichtung nach einem der vorstehend aufgeführten Ansprüche, **dadurch gekennzeichnet, dass** ein Mittel (9) vorgesehen ist, mit dem verhindert wird, dass sich die Abdichtung (2) und damit das Kabel (1) beim Festziehen der Mutter (7; 23; 35) drehen.

10. Vorrichtung nach einem der vorstehend aufgeführten Ansprüche, **dadurch gekennzeichnet, dass** druckerhöhende Mittel (2a, 7a) vorgesehen sind, um die abdichtende Wirkung zwischen der Abdichtung (2) und der Mutter (7; 23; 35) zu erhöhen.

## Revendications

1. Dispositif permettant le passage d'un câble (1) à travers un trou traversant (5 ; 20 ; 30) dans une paroi (6 ; 21 ; 31) de manière à empêcher une fuite à l'intérieur du câble ou à travers le trou traversant dans la paroi, le trou traversant (5 ; 20 ; 30) ayant une portion externe (5a ; 24 ; 30a) de plus grand diamètre, avec un siège (4) formé entre les portions de trou traversant de différents diamètres, le dispositif comportant une portion dudit câble (1) ; une douille (2 ; 19 ; 34) en matériau moulable ayant une portion inférieure (3 ; 33) agencée de manière à reposer contre ledit siège (4) entre les portions de trou traversant, et un écrou annulaire (7 ; 23 ; 35) pouvant être inséré de manière détachable dans ladite portion plus grande (5a ; 24 ; 30a) du trou traversant, l'écrou (7 ; 23 ; 35), dans sa position complètement insérée dans ladite portion plus grande (5a ; 24 ; 30a), étant prévu pour serrer ladite portion inférieure (3 ; 33) de ladite douille contre le siège (4) au fond de la portion plus grande (5a ; 24 ; 30a) du trou traversant (5 ; 20 ; 30) dans la paroi (6 ; 21 ; 31),
**caractérisé en ce que**
la douille est moulée de manière hermétique autour de ladite portion du câble (1).

2. Dispositif selon la revendication 1, dans lequel l'écrou annulaire (7 ; 23 ; 35) a une portion de tête (25) de plus grand diamètre que celui de la portion plus grande (5a ; 24 ; 30a) du trou traversant,
**caractérisé en ce que**
la tête est située à une telle distance de la surface avant de l'écrou que la surface inférieure de ladite tête s'engage avec la surface de la paroi (6 ; 21 ; 31) lorsque ladite portion inférieure (3 ; 33) est serrée contre le fond du siège (4).

3. Dispositif selon la revendication 2,
**caractérisé en ce que**
des moyens d'étanchéité compressibles (26, 27, 28 ; 36, 37) sont disposés au moins entre l'écrou (7 ; 23 ; 35) et le côté de la portion plus grande (5a ; 24 ; 30a) du trou traversant dans la paroi (6 ; 21 ; 31).

4. Dispositif selon l'une quelconque des revendications précédentes, dans lequel le matériau dans la douille moulée (19 ; 34) est de faible solidité et/ou rigidité,
**caractérisé en ce que**
le dispositif comporte un organe de manchon de renforcement (12 ; 32) configuré pour entourer une portion du câble (1) sans être en contact physique avec celui-ci, et configuré pour être connecté à la douille (19 ; 34) pour empêcher le matériau de celle-ci de fuir lorsque la douille est soumise à une force de serrage appliquée par l'écrou (23 ; 35).

5. Dispositif selon la revendication 4,
**caractérisé en ce que**
l'organe de manchon de renforcement (12) est partiellement encastré dans le matériau de la douille moulée (19) et présente une bride évasée radialement (13) prévue pour être serrée contre ledit siège (4) sous l'effet de la force appliquée par l'écrou (23) dans sa position complètement insérée dans ladite portion plus grande (24) du trou traversant dans la paroi.

6. Dispositif selon la revendication 5,
**caractérisé en ce que**
l'organe de manchon de renforcement (12) a des portions en contre-dépouille (15, 18) adjacentes aux deux extrémités dudit organe de manchon de renforcement, dans lesquelles du matériau provenant de la douille moulée (19) pénètre de manière à augmenter la force de serrage entre l'organe de manchon (12) et la douille (19).

7. Dispositif selon la revendication 4,
**caractérisé en ce que**
l'organe de manchon de renforcement (32) est prévu pour entourer l'extérieur d'une portion de la douille moulée (34) et présente une bride radiale (33) prévue pour être serrée contre le siège (4), lorsque l'écrou (35) est dans la position insérée.

8. Dispositif selon l'une quelconque des revendications 4 à 7,
**caractérisé en ce que**
le matériau dans la douille moulée (2 ; 19 ; 34) est un adhésif thermofusible fournissant une force d'adhésion élevée au câble (1) et à l'organe de manchon de renforcement (12 ; 32).

9. Dispositif selon l'une quelconque des revendications précédentes,
**caractérisé en ce**
**qu'**il est prévu des moyens (9) pour empêcher la douille (2) et donc le câble (1) de tourner lorsque l'écrou (7 ; 23 ; 35) est serré.

10. Dispositif selon l'une quelconque des revendications précédentes,
**caractérisé en ce que**
des moyens d'augmentation de la pression (2a, 7a) sont prévus pour augmenter l'effet d'étanchéité entre la douille (2) et l'écrou (7 ; 23 ; 35).
